# EUROPÄISCHE PATENTANMELDUNG

(11) **EP 2 628 974 A2**
(43) Veröffentlichungstag der Anmeldung: **21.08.2013**
(21) Anmeldenummer: 13151250.1
(22) Anmeldetag: 15.01.2013
(51) Int. Cl.: F16F 9/46

(54) **Verstellbare Dämpfventileinrichtung für einen Schwingungsdämpfer**

(30) Priorität: 17.02.2012 DE 102012202485
(71) Anmelder: ZF Friedrichshafen AG, 88038 Friedrichshafen (DE)
(72) Erfinder: Beck, Hubert, 53783 Eitorf (DE)

(57) **Zusammenfassung**

Dämpfventileinrichtung (27) für einen Schwingungsdämpfer, umfassend einen Aktuator (37), der auf einen Vorstufenventilkörper (39) eines Vorstufenventils (59) wirkt, wobei der Vorstufenventilkörper (39) in einer Verspannungskette mit einem Hauptstufenventilkörper (65) eines Hauptstufenventils (67) angeordnet ist, wobei der Hubweg des Hauptstufenventilkörpers (65) proportional dem Hubweg des Vorstufenventilkörpers (39) ist und die Dämpfkraftcharakteristik der Dämpfventileinrichtung (27) von einer Ventilfederanordnung (41;69) beeinflusst wird, wobei der Vorstufenventilkörper (39) einen verstellbaren Federspanner (49) ansteuert, der die Vorspannung einer Hauptstufenventilfeder (69) als Bestanteil der Ventilfederanordnung (41;69) bestimmt, wobei das Hauptstufenventil (67) unabhängig von der Arbeitsrichtung des Schwingungsdämpfers von einem Dämpfmedium stets gleichgerichtet durchströmt wird

## Beschreibung

Die Erfindung betrifft eine Dämpfventileinrichtung für einen Schwingungsdämpfer gemäß dem Oberbegriff von Patentanspruch 1.

Die DE 198 22 448 A1 betrifft eine gattungsbildende Dämpfventileinrichtung, die einen mittels eines elektrischen Aktuators betätigten Vorstufenventilkörper aufweist, der direkt auf einen Abflusskanal eines Hauptstufenventilkörpers einwirkt. Der Vorstufenventilkörper wird von einer Ventilfederanordnung in Richtung des Hauptstufenventilkörpers vorgespannt. In dem Maße, wie der Vorstufenventilkörper eine axiale Verstellbewegung ausführt, wird der Hauptstufenventilkörper nachgeführt. Deshalb wird diese Ventilbauform auch Weg-Folge-Ventil genannt. Die Kraft der Ventilfederanordnung und die hydraulische Schließkraft in einem Steuerraum wirken parallel auf den Hauptstufenventilkörper. Daraus ergeben sich konstruktive Vorgaben für die Bauform und Dimensionierung des Hauptstufenventilkörpers.

Aus der DE 196 24 897 A1 ist eine verstellbare Dämpfventileinrichtung bekannt, bei der ein Vorstufenventil den Abflussquerschnitt eines Steuerraums bestimmt. Über das Druckniveau in dem Steuerraum wird eine hydraulische Schließkraft auf einen Hauptstufenventilkörper eingestellt. In dem Steuerraum ist eine Ventilschließfeder angeordnet, deren Schließkraft der hydraulischen Schließkraft ebenfalls parallel geschaltet ist.

Die Aufgabe der vorliegenden Erfindung besteht darin, eine alternative Dämpfventileinrichtung zu realisieren, die einfach im Aufbau ist und fahrzeuggerechte Dämpfkraftkennlinien ermöglicht.

Erfindungsgemäß wird die Aufgabe durch die Merkmale des Patentanspruchs gelöst.

Der Vorteil dieses Bauprinzips besteht darin, dass nun ein Kraft-Weg-Folge-Ventil zur Verfügung steht. Der Betriebsweg des Vorstufenventilkörpers ist nicht unbedingt identisch mit dem Betriebsweg des Hauptstufenventilkörpers. Je nach eingestellter Vorspannung der Hauptstufenventilfeder führt der Hauptstufenventilkörper einen mehr oder weniger großen Betriebsweg aus. Des Weiteren wird für die Dämpfventileinrichtung keine Rückschlagventilanordnung benötigt. Folglich vereinfacht sich der generelle Aufbau der Dämpfventileinrichtung maßgeblich.

In weiterer vorteilhafter Ausgestaltung der Erfindung ist der Federspanner in einem Ventilgehäuse beweglich geführt, wobei eine zur Hauptstufenventilfeder abgewandte Rückseite des Federspanners und ein Boden des Ventilgehäuses einen mit Dämpfmedium gefüllten Steuerraum bilden. Die Größe der Rückseite des Federspanners ist dabei unabhängig von der Größe der Öffnungsfläche am Hauptstufenventilkörper. Diese Unabhängigkeit der vom Dämpfmedium druckbeaufschlagten Flächen ermöglicht eine sehr große Bandbreite hinsichtlich der Anpassung des Dämpfventils an eine gewünschte Dämpfkraftkennlinie. So kann die druckbeaufschlagte Fläche am Federspanner auch größer sein als eine in Öffnungsrichtung druckbeaufschlagte Fläche am Hauptstufenventil, so dass auch besonders große Dämpfungskräfte erreicht werden können.

Dabei weist der Federspanner einen Abflusskanal ausgehend von dem Steuerraum auf, wobei der Abflussquerschnitt des Abflusskanals von dem Vorstufenventilkörper angesteuert wird. Dadurch kann die Geometrie des Hauptstufenventilkörpers im Vergleich zum genannten Stand der Technik vereinfacht werden.

Das Federspannnergehäuse ist in seiner Einbaulänge für die Hauptstufenventilfeder axial einstellbar ausgeführt. Die Einstellbarkeit kann z. B. durch eine leichte Presspassung oder eine Gewindeverbindung umgesetzt sein und bietet die Option, dass der Federspanner und damit das Hauptstufenventil unabhängig von dem Vorstufenventil als separate Baueinheit montiert und justiert werden kann.

Gemäß einem vorteilhaften Unteranspruch wird der Vorstufenventilkörper von einer Stellfeder als Teil der Ventilfederanordnung positioniert, wobei die Stellfederzwischen dem Federspannergehäuse und einem Aktuatorgehäuse angeordnet ist. Das gesamte Vorstufenventil kann unabhängig vom Hauptstufenventil vor dem Einbau in die Dämpfventileinrichtung überprüft werden. Der Aktuator und die Stellfeder können exakt aufeinander abgestimmt werden.

Gemäß einem Unteranspruch weist der Federspanner einen Führungszapfen für den kreisringförmig ausgeführten Hauptstufenventilkörper auf. Auch bei einer vergleichsweise kurzen Führungslänge kann der Hauptstufenventilkörper keine Kippbewegung ausführen.

Eine besonders kurz und einfach bauende Dämpfventileinrichtung zeichnet sich dadurch aus, dass die mindestens eine Scheibenfeder zwischen dem Federspanner und der Hauptstufenventilsitzfläche verspannt ist und damit den Hauptstufenventilkörper bildet.

Bei einer Ausführungsform ist vorgesehen, dass der Aktuator mindestens zwei Magnetspulen aufweist, die eine entgegengesetzt gerichtete Stellkraft auf den Vorstufenventilkörper ausüben. Vorteilhafterweise kann für den Notbetrieb, d. h. zum Beispiel bei Ausfall der Stromversorgung der Magnetspulen, eine Dämpfkrafteinstellung vorliegen, die von einer extrem weichen oder harten Dämpfkrafteinstellung abweicht.

Anhand der folgenden Figurenbeschreibung soll die Erfindung näher erläutert werden.

Es zeigt:
- Fig. 1: Schwingungsdämpfer in Gesamtdarstellung
- Fig. 2 u. 3: Dämpfventileinrichtung in Schnittdarstellung
- Fig. 4: Aktuatorgehäuseteil mit Vorstufenventilkörper
- Fig. 5: Federspannergehäuse als Einzelteil
- Fig. 6: Dämpfventileinrichtung mit zwei Spulen

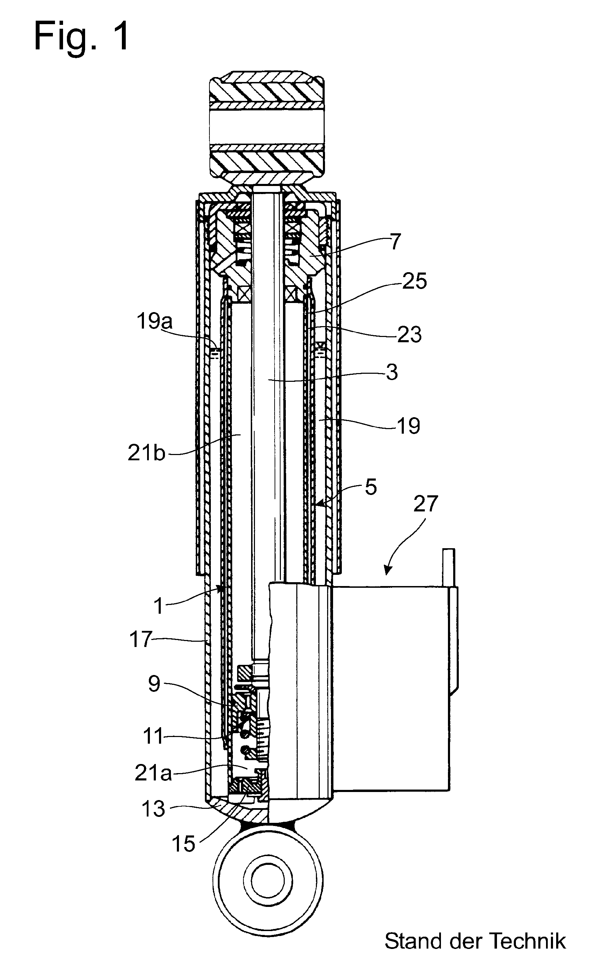

In Fig. 1 weist ein Schwingungsdämpfer einen Zylinder 1 auf, in dem eine Kolbenstange 3 axial beweglich angeordnet ist. Eine Führungs- und Dichtungseinheit 7 führt die Kolbenstange 3 aus dem oberen Ende des Zylinders heraus. Innerhalb des Zylinders 1 ist an der Kolbenstange 3 eine Kolbeneinheit 9 mit einer Kolbenventilanordnung 11 befestigt. Das untere Ende des Zylinders 1 ist durch eine Bodenplatte 13 mit einer Bodenventilanordnung 15 abgeschlossen. Der Zylinder 1 wird von einem Behälterrohr 17 umhüllt. Das Behälterrohr 17 und ein Zwischenrohr 5 bilden einen Ringraum 19, der eine Ausgleichskammer darstellt. Der Raum innerhalb des Zylinders 1 ist durch die Kolbeneinheit 9 in eine erste Arbeitskammer 21 a und eine zweite Arbeitskammer 21 b unterteilt. Die Arbeitskammern 21 a und 21 b sind mit Druckflüssigkeit gefüllt. Die Ausgleichskammer 19 ist bis zu dem Niveau 19a mit Flüssigkeit und darüber mit Gas gefüllt. Innerhalb der Ausgleichskammer 19 ist eine erste Leitungsstrecke, nämlich eine Hochdruckteilstrecke 23, gebildet, welche über eine Bohrung 25 des Zylinders 1 mit der zweiten Arbeitskammer 21 b in Verbindung steht. An diese Hochdruckteilstrecke schließt sich eine seitlich an dem Behälterrohr 17 angebaute Dämpfventileinrichtung 27 an. Von dieser führt, nicht dargestellt, eine zweite Leitungsstrecke, nämlich eine Niederdruckteilstrecke, in die Ausgleichskammer 19.

Fährt die Kolbenstange 3 aus dem Zylinder 1 nach oben aus, verkleinert sich die obere Arbeitskammer 21 b. Es baut sich in der oberen Arbeitskammer 21 b ein Überdruck auf, der sich nur durch die Kolbenventilanordnung 11 in die untere Arbeitskammer 21 a abbauen kann, solange die Dämpfventileinrichtung 27 geschlossen ist. Wenn die Dämpfventileinrichtung 27 geöffnet ist, so fließt gleichzeitig Flüssigkeit von der oberen Arbeitskammer 21 b durch die Hochdruckteilstrecke 23 und die Dämpfventileinrichtung 27 in die Ausgleichskammer 19. Die Dämpfcharakteristik des Schwingungsdämpfers beim Ausfahren der Kolbenstange 3 ist also davon abhängig, ob die Dämpfventileinrichtung 27 mehr oder weniger offen oder geschlossen ist. Dabei kann die Einstellbarkeit der Absperrventileinrichtung gestuft oder stufenlos erfolgen.

Wenn die Kolbenstange 3 in den Zylinder 1 einfährt, so bildet sich in der unteren Arbeitskammer 21 a ein Überdruck. Flüssigkeit kann von der unteren Arbeitskammer 21 a durch die Kolbenventilanordnung 11 nach oben in die obere Arbeitskammer 21 b übergehen. Die durch das zunehmende Kolbenstangenvolumen innerhalb des Zylinders 1 verdrängte Flüssigkeit wird durch die Bodenventilanordnung 15 in die Ausgleichskammer 19 ausgetrieben. In der oberen Arbeitskammer 21 b tritt, da der Durchflußwiderstand der Kolbenventilanordnung 11 geringer ist als der Durchflußwiderstand der Bodenventilanordnung 15, ebenfalls ein steigender Druck auf. Dieser steigende Druck kann bei geöffneter Dämpfventileinrichtung 27 durch die Hochdruckteilstrecke 23 wiederum in den Ausgleichsraum 19 überfließen. Dies bedeutet, dass bei geöffneter Dämpfventileinrichtung 27 der Stoßdämpfer auch beim Einfahren dann eine weichere Charakteristik hat, wenn die Dämpfventileinrichtung 27 geöffnet ist und eine härtere Charakteristik, wenn die Dämpfventileinrichtung geschlossen ist, genauso wie beim Ausfahren der Kolbenstange. Festzuhalten ist, dass die Strömungsrichtung durch die Hochdruckteilstrecke 23 des Bypasses immer die gleiche ist, unabhängig davon, ob die Kolbenstange ein- oder ausfährt.

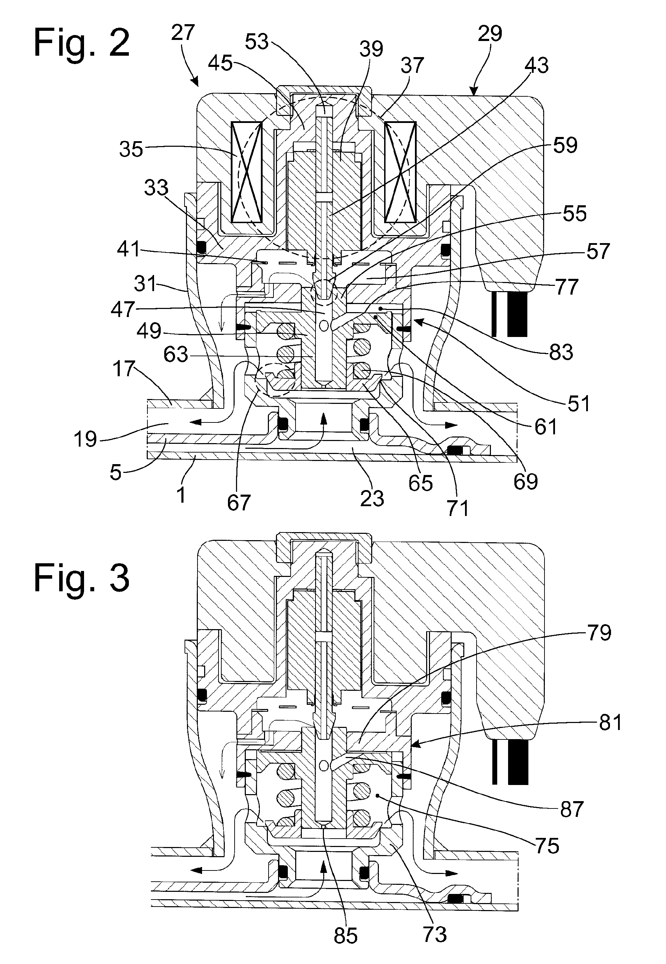

Die Figuren 2 und 3 zeigen eine erste Ausführungsform der Dämpfventileinrichtung 27, die in einem Ventilgehäuse 29 außenseitig an dem Behälter 17 angeordnet ist. Das Ventilgehäuse 29 ist mit einem behälterohrseitigen Rohrstutzen 31 fest verbunden. Grundsätzlich ist die Erfindung jedoch nicht auf diese Anordnung im Schwingungsdämpfer beschränkt. In einem Aktuatorgehäuseteil 33 ist eine Spule 35 als Teil eines Aktuators 37 angeordnet. Grundsätzlich kann der Aktuator 37 beliebig ausgeführt sein, d. h. elektrisch, pneumatisch hydraulisch oder auch mechanisch. Die Spule 35 übt eine Magnetkraft auf einen Vorstufenventilkörper 39 aus, der von einer scheibenförmigen Stellfeder 41 beaufschlagt ist. Der Vorstufenventilkörper 39 verfügt über einen rohrförmigen Achskörper 43, der mit einem ersten Ende in einem scheibenförmigen Rückschlusskörper 45 gelagert ist.

Mit dem anderen Ende ist der Vorstufenventilkörper 13 über seinen rohrförmigen Achskörper 43 in einem Abflusskanal 47 eines Federspanners 49 gelagert, der ein vom Aktuatorgehäuseteil 33 separates Federspannergehäuse 51 aufweist. Zwischen dem Aktuatorgehäuseteil 33 und dem Federspannergehäuse 51 ist die den Vorstufenventilkörper 39 positionierende Stellfeder 41 angeordnet. Der Abflusskanal 47 weist denselben Querschnitt auf, wie eine Sacklochbohrung 53 im Rückschlusskörper 45.

Der Federspanner 49 umfasst einen zapfenförmigen Führungsabschnitt 55, der in dem Federspannergehäuse 51 geführt ist. Das Federspannergehäuse 51 bildet mit dem Aktuatorgehäuseteil 33 einen Abflussraum 57 eines Vorstufenventils 59. Dem Führungsabschnitt 55 schließt sich ein Flanschbereich 61 an, der im Federspannergehäuse 51 axial beweglich geführt ist. Auf einem zweiten Führungsabschnitt 63 des Federspanners 49 ist ein kreisringförmig ausgeführter Hauptstufenventilkörper 65 eines Hauptstufenventils 67 axial verschieblich gelagert. Der Hauptstufenventilkörper 65 wird von einer Hauptstufenventilfeder 69 auf eine Hauptstufenventilsitzfläche 71 vorgespannt. Die Hauptstufenventilsitzfläche 71 ist wiederum an einem Unterteil 73 des Federspannergehäuses 51 ausgeführt.

Der Hauptstufenventilkörper 65 und der Flanschbereich 61 des Federspanners 49 begrenzen einen Hubraum 75, in dem die Hauptstufenventilfeder 69 angeordnet ist. Dieser Hubraum 75 ist an die Niederdruckteilstrecke bzw. dem Ausgleichsraum 19 angeschlossen.

Eine zur Hauptstufenventilfeder 69 abgewandte Rückseite 77 des Federspanners 49 am Flanschbereich 61 und ein Boden 79 eines Oberteils 81 des Federspannergehäuses 51 bilden einen mit Dämpfmedium gefüllten Steuerraum 83. Der Steuerraum 83 ist über den Abflusskanal 47 an den Abflussraum 57 angeschlossen, wobei der Abflussquerschnitt des Abflusskanals 47 von dem Vorstufenventilkörper 39 angesteuert wird.

Wie bereits im Zusammenhang mit der Figur 1 erklärt, wird die Dämpfventileinrichtung 27 und damit auch der Hauptstufenventilkörper 65 unabhängig von der Bewegungsrichtung der Kolbenstange 3 stets über eine Stirnseite 71 des Hauptstufenventilkörpers 65 angeströmt. Das Dämpfmedium fließt über eine Konstantdrossel 85 in den Abflusskanal 47 in Richtung des Vorstufenventils 59. Über mindestens eine Radialöffnung 87 im Federspanner 49 strömt Dämpfmedium in den Steuerraum 83 und beaufschlagt die Rückseite 77 des Federspanners 49. Über den rohrförmigen Achskörper 43 gelangt Dämpfmedium in die Sacklochbohrung 53 des Rückschlusskörpers 45. Dadurch ist der Vorstufenventilkörper hydraulisch ausgeglichen belastet. Die auf den Federspanner 49 wirkende Kraft resultiert aus der Grundvorspannung der Stellfeder 41 und der entgegengesetzt gerichteten Magnetkraft des Aktuators 37. Am Vorstufenventil 59 stellt sich ein Abflussquerschnitt ein, der proportional dem Drosselquerschnitt der Konstantdrossel 85 in Richtung des Abflusskanals 47 ist. Dadurch folgt der Federspanner 49 stets der jeweiligen Positionsvorgabe des Aktuators bzw. des Vorstufenventilkörpers 39. In folge dessen wird die Vorspannung der Hauptstufenventilfeder 69 verändert.

In der Fig. 2 liegt eine minimale Bestromung der Spule 35 vor. Die Stellfeder 41 ist deshalb plan oder nur minimal geschirmt. Folglich ist die Hauptstufenventilfeder 69 maximal vorgespannt. Tendenziell führt dann die Anströmung des Hauptstufenventils 67 zu einer großen Dämpfkraft. Die Figur 3 zeigt, wie sich durch eine stärkere Änderung der resultierenden Betätigungskraft des Aktuators 37 bedingt durch die stärkere Bestromung die Position des Vorstufenventilkörpers 39 in Richtung des Rückschlusskörpers 45 verschiebt. Der Federspanner 49 bewegt sich ebenfalls in Richtung des Rückschlusskörpers 45, so dass die Vorspannung auf die Hauptstufenventilfeder 69 abnimmt. Tendenziell ist bei schwächer vorgespannter Hauptstufenventilfeder 69 eine geringere Druckkraft notwendig, um den Hauptstufenventilkörper 65 von der Ventilsitzfläche 71 abheben zu lassen. Es liegt somit eine weichere Dämpfkrafteinstellung vor. Bei einer Verstellbewegung des Vorstufenventilkörpers 39 oder einer Abhubbewegung des Hauptstufenventilkörpers 65 findet eine axiale Relativbewegung zwischen dem Hauptstufenventilkörper 65 und dem Federspanner 49 im Bereich des zweiten Führungszapfens 63 statt.

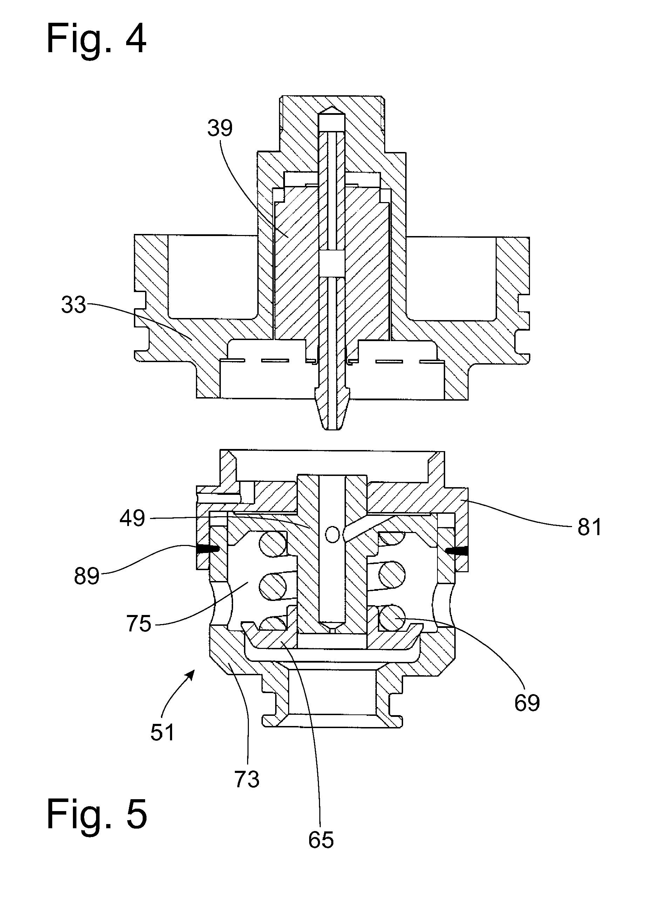

Die Figur 4 zeigt die Unterseite des Aktuatorgehäuses 33 zusammen mit dem Vorstufenventilkörper 39. Durch den Einsatz einer nicht dargestellten Justierspule kann das Vorstufenventil auf seine mechanische Funktionstüchtigkeit überprüft werden.

Die Fig. 5 verdeutlicht den Aufbau des Federspannergehäuses 51, das unabhängig von dem Aktuatorgehäuse 33 montiert und überprüft werden kann. Das Federspannergehäuse 51 ist axial zweigeteilt ausgeführt, wobei zwei zwischen den beiden Gehäuseteilen 81; 73 die Hauptstufenventilfeder 69 verspannt ist. Durch eine axiale Verschiebung der beiden Gehäuseteile 73; 81 zueinander wird der axiale Einbauraum und damit die Vorspannung der Hauptstufenventilfeder 69 bestimmt. Die beiden Gehäuseteile 73; 81 bilden in diesem Fall eine Presspassung, die ggf. durch eine Verschweißung 89 gesichert wird.

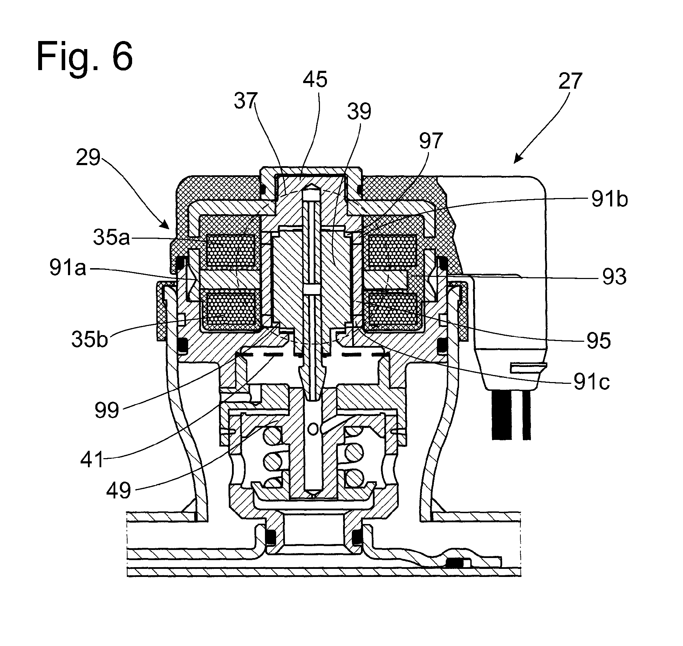

Die Figur 6 zeigt eine Dämpfventileinrichtung 27 mit einem Federspanner 49 gemäß den Figuren 1 und 2. Abweichend kann der Aktuator 37 Stellkräfte in zwei Richtungen ausüben. Dazu sind in dem Dämpfventilgehäuseteil zwei Spulen 35a; 35b als Teil des Aktuators 37 angeordnet.

Im Ventilgehäuse 29 sind zwischen den beiden Magnetspulen 35a; 35b magnetische Widerstände 91 a; 91 b; 91 c angeordnet, so dass zwei vollkommen getrennte Magnetkraftfelder vorliegen. Der magnetische Widerstand 91 a verhindert einen magnetischen Fluss über das gesamte Ventilgehäuse. Die beiden Magnetspulen 35a; 35b bilden über eine Beschichtung 93 eine handhabbare Baueinheit. Die magnetischen Widerstände 91 b; 91 c an den Endbereichen einer Führungshülse 95 verhindern ebenfalls einen Kurzschluss.

Die Spulen 35a; 35b üben entgegengesetzt wirksame Magnetkräfte auf den gemeinsamen Vorstufenventilkörper 39 aus, der von der scheibenförmigen Stellfeder 41 in einer definierten Position bei deaktiviertem Aktuator 37 gehalten wird.

Der Vorstufenventilkörper 37 verfügt wie in den Fig. 2 und 3 über einen rohrförmigen Achskörper 43, der mit einem ersten Ende in einem scheibenförmigen Rückschlusskörper 45 gelagert ist.

Der Rückschlusskörper 45 bildet mit einem ersten gestuften Profil 97 des Vorstufenventilkörpers 37 eine erste Polebene für den Übergang der Magnetkraft auf den Vorstufenventilkörper und das Aktuatorgehäuseteil 33 mit einem zweiten, gegenüberliegenden Profil 99 eine zweite Polebene für die Magnetkraft auf den Vorstufenventilkörper 37.

Bei deaktiviertem Aktuator, d. h. beide Magnetspulen 35a; 35b sind stromlos, bestimmt ein Kräftegleichgewicht der Stellfeder 41 mit der Hauptstufenventilfeder 69 die Dämpfkraftkennlinie. Tendenziell führt dann die Anströmung des Hauptstufenventils 67 zu einer mittleren Dämpfkraft. Eine Bestromung der Magnetspule 35a übt eine zusätzliche Stellkraft auf den Vorstufenventilkörper 37 in Richtung des Rückschlusskörpers 45 aus. Damit ist eine Druckabsenkung im Steuerraum 83 verbunden, der wiederum eine weichere Dämpfkraft bewirkt. Eine Bestromung der Magnetspule 35b führt zu einer Zuziehbewegung des Vorstufenventils 59, die wiederum mit einer Erhöhung des Druckniveaus im Steuerraum 83 verbunden ist. Folglich wird die Hauptstufenventilfeder 69 stärker vorgespannt und das Dämpfkraftniveau steigt.

### Bezugszeichen

- 1: Zylinder
- 3: Kolbenstange
- 5: Zwischenrohr
- 7: Führungs- und Dichtungseinheit
- 9: Kolbeneinheit
- 11: Kolbenventilanordnung
- 13: Bodenplatte
- 15: Bodenventilanordnung
- 17: Behälterrohr
- 19: Ringraum
- 21 a-b: Arbeitskammer
- 23: Hochdruckteilstrecke
- 25: Bohrung
- 27: Dämpfventileinrichtung
- 29: Ventilgehäuse
- 31: Rohrstutzen
- 33: Aktuatorgehäuseteil
- 35; 35a; 35b: Spule
- 37: Aktuator
- 39: Vorstufenventilkörper
- 41: Stellfeder
- 43: Achskörper
- 45: Rückschlusskörper
- 47: Abflusskanal
- 49: Federspanner
- 51: Federspannergehäuse
- 53: Sacklochbohrung
- 55: Führungsabschnitt
- 57: Abflussraum
- 59: Vorstufenventil
- 61: Flanschbereich
- 63: Führungszapfen
- 65: Hauptstufenventilkörper
- 67: Hauptstufenventile
- 69: Hauptstufenventilfeder
- 71: Hauptstufenventilsitzfläche
- 73: Unterteil
- 75: Hubraum
- 77: Rückseite
- 79: Boden
- 81: Oberteil
- 83: Steuerraum
- 85: Konstantdrossel
- 87: Radialöffnung
- 89: Verschweißung
- 91 a-c: Widerstände
- 93: Beschichtung
- 95: Führungshülse
- 97: erstes Profil
- 99: zweites Profil

## Patentansprüche

1. Dämpfventileinrichtung (27) für einen Schwingungsdämpfer, umfassend einen Aktuator (37), der auf einen Vorstufenventilkörper (39) eines Vorstufenventils (39) wirkt, wobei der Vorstufenventilkörper (39) in einer Verspannungskette mit einem Hauptstufenventilkörper (65) eines Hauptstufenventils (67) angeordnet ist, wobei der Hubweg des Hauptstufenventilkörpers (65) proportional dem Hubweg des Vorstufenventilkörpers (39) ist und die Dämpfkraftcharakteristik der Dämpfventileinrichtung (27) von einer Ventilfederanordnung (41; 69) beeinflusst wird, **dadurch gekennzeichnet, dass** der Vorstufenventilkörper (39) einen verstellbaren Federspanner (49) ansteuert, der die Vorspannung einer Hauptstufenventilfeder (69) als Bestanteil der Ventilfederanordnung (41; 69) bestimmt, wobei das Hauptstufenventil (67) unabhängig von der Arbeitsrichtung des Schwingungsdämpfers von einem Dämpfmedium stets gleichgerichtet durchströmt wird.

2. Dämpfventileinrichtung nach Anspruch 1, **dadurch gekennzeichnet, dass** der Federspanner (49) in einem Federspannergehäuse (51) beweglich geführt ist, wobei eine zur Hauptstufenventilfeder (69) abgewandte Rückseite (77) des Federspanners (49) und ein Boden (79) des Federspannergehäuses (51) einen mit Dämpfmedium gefüllten Steuerraum (83) bilden.

3. Dämpfventileinrichtung nach Anspruch 2, **dadurch gekennzeichnet, dass** das Federspannergehäuse (51) in seiner Einbaulänge für die Hauptstufenventilfeder (69)axial einstellbar ist.

4. Dämpfventileinrichtung nach Anspruch 2, **dadurch gekennzeichnet, dass** der Federspanner (49) einen Abflusskanal (47) ausgehend von dem Steuerraum (83) aufweist, wobei der Abflussquerschnitt des Abflusskanals (47) von dem Vorstufenventilkörper (39) angesteuert wird.

5. Dämpfventileinrichtung nach Anspruch 1, **dadurch gekennzeichnet, dass** der Vorstufenventilkörper (39) von einer Stellfeder (41) als Teil der Ventilfederanordnung (41; 69) positioniert wird, wobei die Stellfeder (41) zwischen dem Federspannergehäuse (51) und einem Aktuatorgehäuse (33) verspannt ist.

6. Dämpfventileinrichtung nach Anspruch 1, **dadurch gekennzeichnet, dass** der Federspanner (49) einen Führungszapfen (63) für den kreisringförmig ausgeführten Hauptstufenventilkörper (65) aufweist.

7. Dämpfventileinrichtung nach einem der Ansprüche 1 - 6, **dadurch gekennzeichnet, dass** der Aktuator (37) mindestens zwei Magnetspulen (35a; 35b) aufweist, die eine entgegengesetzt gerichtete Stellkraft auf den Vorstufenventilkörper (39) ausüben.
